# EUROPEAN PATENT APPLICATION

(11) **EP 4 228 079 A1**
(43) Date of publication of application: **16.08.2023**
(21) Application number: 21962756.9
(22) Date of filing: 18.11.2021
(51) Int. Cl.: H01M 50/509

(54) **BATTERY PACK AND ELECTRIC DEVICE THEREFOR**

(71) Applicant: Contemporary Amperex Technology Co., Limited, Ningde City, Fujian 352100 (CN)
(72) Inventor: OUYANG, Shaocong, Ningde City, Fujian 352100 (CN); FU, Chenghua, Ningde City, Fujian 352100 (CN); DONG, Miaomiao, Ningde City, Fujian 352100 (CN); YE, Yonghuang, Ningde City, Fujian 352100 (CN); BIE, Changfeng, Ningde City, Fujian 352100 (CN)
(74) Representative: Gong, Jinping
(86) International application number: PCT/CN2021/131491
(87) International publication number: WO 2023/087214

(57) **Abstract**

The present application relates to a battery pack comprising a first battery cell type and a second battery cell type, wherein the first battery cell type includes n first battery cells, and the second battery cell type includes m second battery cells, with n and m being each independently selected from an integer of 1 or more, and wherein the second battery cell has an internal resistance less than that of the first battery cell, with the difference in internal resistance between the first battery cell and the second battery cell being ≥ 0.15 mohm; the battery pack has diagonals Lc defined across length and width directions thereof, an area enclosed by connecting 4 points on the two diagonals Lc that are positioned at a distance of 1/4 Lc from each of the endpoints of the diagonals with lines in sequence, is defined as area A, and the remaining area is defined as area B, wherein the percentage by number of the first battery cells in the battery cells comprised in the area A is 20% to 100%, and the percentage by number of the second battery cells in the battery cells comprised in the area B is 5% to 100%. The battery pack of the present application has improved discharge capacity consistency in the inner and outer areas at low temperature and an improved discharge capacity retention rate. The present application further relates to a power consuming device comprising the battery pack.

## Description

### Technical Field

The present application relates to the field of secondary batteries, and in particular to a battery pack and a power consuming device thereof.

### Background Art

Secondary batteries have become the most popular energy storage system due to the characteristics such as low costs, a long lifespan, and a good safety performance, and are now widely used in the fields of battery electric vehicles, hybrid electric vehicles, the smart grids, etc. A certain spatial arrangement of a plurality of lithium ion batteries results in a battery pack, which can be directly used as a power source for electric vehicles.

However, currently there is a common problem of "range anxiety" when customs choose to use electric vehicles, especially in winter. It has been a technical problem that needs to be solved urgently to improve the discharge performance of secondary batteries at low temperature or in winter and improve the endurance mileage of traction batteries at low temperature.

### Summary of the Invention

In view of the above problem, an objective of the present application is to provide a battery pack so as to solve the problem of significantly reduced discharge performance of battery packs at low temperature or in winter.

In order to achieve the above objective, in a first aspect of the present application, provided is a battery pack comprising a first battery cell type and a second battery cell type, wherein the first battery cell type includes n first battery cells, and the second battery cell type includes m second battery cells, with n and m being each independently selected from an integer of 1 or more, wherein the second battery cell has an internal resistance less than that of the first battery cell, with the difference in internal resistance between the first battery cell and the second battery cell being ≥ 0.15 mohm;
the battery pack, has diagonals Lc defined across length and width directions thereof, an area enclosed by connecting 4 points on the two diagonals Lc that are positioned at a distance of 1/4 Lc from each of the endpoints of the diagonals with lines in sequence, is defined as area A, and the remaining area is defined as area B, wherein the percentage by number of the first battery cells in the battery cells comprised in the area A is 20% to 100%, and the percentage by number of the second battery cells in the battery cells comprised in the area B is 5% to 100%.

In the present application, the area A is located in the inner area of the battery pack, and the area B, by contrast, is located in the outer area of the battery pack. At least part of second battery cells with a lower internal resistance are placed in the outer area of the battery pack, and at least part of first battery cells with a slightly higher internal resistance are placed in the inner area of the battery pack, such that the difference of the kinetic performance in different areas of the battery pack is adjusted and controlled by means of the difference in internal resistances of the battery cells. In such manner, the overall discharge capacity of the battery pack can be improved, and at the same time, the consistency of the discharge capacity of battery cells in the inner areas and the outer areas of the battery pack at low temperature is achieved, thus, to a significant extent, offsetting the discharge capacity difference of the battery cells in different areas when the battery pack has inconsistent temperatures in its inner areas and outer areas under conditions of a low temperature, and solving the problem of significantly decreased discharge performance of the battery pack at low temperature or in winter.

In any embodiment, in the battery pack, the percentage by number of the first battery cells in the battery cells comprised in the area A may further be 60% to 100%, optionally, 80% - 100%. The percentage by number of the second battery cells in the battery cells comprised in the area B may further be 40% to 100%, optionally, 60% - 100%. In the present application, when the percentage by numbers of the first battery cells and the second battery cells respectively comprised in the area A and the area B of a battery pack are within the above ranges, the kinetic performance of batteries in different areas of the battery pack at low temperature conditions can be further adjusted and controlled, which is beneficial for improving the low-temperature discharge performance of the battery pack.

In any embodiment, in the battery pack, the difference in the internal resistance between the first battery cell and the second battery cell is ≥ 0.20 mohm, optionally, ≥ 0.25 mohm. In the present application, when the first battery cell and the second battery cell have an internal resistance difference in the above range, the kinetic performance of the battery cells in different areas of the battery pack at low temperature can be ensured to be highly consistent, and at the same time, the electrical performance consistency of the battery pack at normal temperature or a high temperature will be further improved with the number of the second battery cells in the area B of the battery pack being reduced appropriately.

In any embodiment, in the battery pack, the ratio of the internal resistance of the first battery cells to that of the second battery cells is ≥ 1.1, and optionally, is 1.2 to 1.5. The internal resistance difference between the first battery cell and the second battery cell is increased, such that the consistency of the discharge capacity in the inner and outer areas of the battery pack can be further improved.

In any embodiment, the first battery cell has an internal resistance of 1.5 mohm - 1.8 mohm, and the second battery cell has an internal resistance of 1.2 mohm - 1.5 mohm. A combination of two battery cell types that have suitable internal resistance value ranges is selected, such that the effects resulting from the specific arrangement of the battery cell can be further improved.

In some embodiments, the first battery cell comprises a first positive electrode active material represented by formula (I), and the second battery cell comprises a second positive electrode active material represented by formula (II):

LiFe₁₋ₓ₁M¹ₓ₁PO₄ formula (I)

LiFe₁₋ₓ₂M²ₓ₂PO₄ formula (II)

where 0 ≤ x1 ≤ 0.1, 0 < x2 ≤0.1, M¹ and M² are each independently selected from one or more of Cu, Mn, Cr, Zn, Pb, Ca, Co, Ni, Sr and Ti, and M² includes at least Mn.

In some embodiments, the Mn element in the second positive electrode active material has a mass percentage greater than that of the Mn element in the first positive electrode active material. The type, structure and Mn content of the positive electrode active material of each type of battery cells are selected, which is conducive to further achieving the kinetic performance differences of different battery cells.

In some embodiments, the second positive electrode active material has a volume mean particle size less than that of the first positive electrode active material. Optionally, the second positive electrode active material has a volume mean particle size D50 value of 0.3 µm-0.8 µm, and the first positive electrode active material has a volume mean particle size D50 value of 0.8 µm-2.0 µm. The difference in the volume mean particle size of the positive electrode active material and the numerical ranges thereof are also conducive to achieving the resistance value difference of different battery cells.

In some other embodiments, the first battery cell has a third positive electrode active material represented by formula (III), and the second battery cell has a fourth positive electrode active material represented by formula (IV):

Li₁₊ₓ₃NiₐCo_{b}M³_{1-a-b}O_{2-y3}A_{y3} formula (III)

Li₁₋ₓ₄MnₑM⁴₂₋ₑO_{4-d}B_{d} formula (IV)

where in formula (III), -0.1 ≤ x3 ≤ 0.2, 0.3 ≤ a < 0.95, 0 < b < 0.2, 0 < a + b < 1, 0 ≤ y3 < 0.2, M³ is selected from one or more of Mn, Fe, Cr, Ti, Zn, V, Al, Zr and Ce, and A is selected from one or more of S, F, Cl and I; in formula (IV), -0.1 ≤ x4 ≤ 0.2, 0 < e ≤ 2, 0 ≤ d < 1, M⁴ is one or more of Ni, Fe, Cr, Ti, Zn, V, Al, Mg, Zr and Ce, and B is one or more of S, N, F, Cl, Br and I.

In any embodiment, both of the first battery cell and the second battery cell contain an electrolyte, and the electrolyte in the second battery cell has an electrical conductivity greater than that of the electrolyte in the first battery cell. Optionally, the electrolyte in the second battery cell has an electrical conductivity of 9 mS/cm-14 mS/cm, and the electrolyte in the first battery cell has an electrical conductivity of 5 mS/cm-8 mS/cm. The electrical conductivity of the electrolytes of the two types of battery cells and the numerical range are selected, such that the difference in the internal resistance and the discharge capacity of the battery cells are achieved.

In any embodiment, in the area B, the battery cells at least at the four corners of the battery pack are all the second battery cells. Optionally, in the area B, only the battery cells at the four corners of the battery pack are the second battery cells. Different battery cells are selectively placed in specific positions, such that a precise control over the overall discharge capacity of the battery pack can be achieved.

In any embodiment, the discharge capacity at -7°C of the battery pack is 82% - 96% of the rated capacity of the battery pack. Therefore, the discharge capacity retention rate at low temperature or in winter of the battery pack can be maintained relatively well.

In a second aspect of the present application, provided is a power consuming device comprising the battery pack in the first aspect of the present application.

### Brief Description of the Drawings

In order to more clearly illustrate the technical solutions of the present application, brief introductions are given below to the drawings required to be used in the examples of the present application. Apparently, the drawings described below are merely some examples of the present application, and those of ordinary skill in the art may derive other drawings from these drawings without creative efforts.
Fig. 1 is a schematic diagram of a lithium ion secondary battery in an embodiment of the present application.
Fig. 2 is an exploded view of the lithium ion second battery shown in Fig. 1 in an embodiment of the present application.
Fig. 3 is a schematic diagram of a battery pack in an embodiment of the present application.
Fig. 4 is an exploded view of the battery pack shown in Fig. 3 in an embodiment of the present application.
Fig. 5 is a schematic diagram of the area division and the arrangement of battery cells in the battery pack shown in Fig. 3 in an embodiment of the present application.
Fig. 6 is a schematic diagram of a device with a battery pack in an embodiment of the present application used as a power supply.

### List of reference numerals

1 - battery pack
2 - upper case body
3 - lower case body
4 - battery module
5 - lithium ion secondary battery
51 - housing
52 - electrode assembly
53 - cover plate

### Detailed Description of Embodiments

For the sake of brevity, some numerical ranges are explicitly disclosed herein. However, any lower limit may be combined with any upper limit to form a range that is not explicitly described; and any lower limit may be combined with any other lower limit to form a range that is not explicitly specified, and any upper limit likewise may be combined with any other upper limit to form a range that is not explicitly specified. Furthermore, each individually disclosed point or single value itself may serve as a lower or upper limit in combination with any other point or single value or with other lower or upper limit to form an unspecified range.

The present applicants have found by research that: Electric vehicles have a poor endurance mileage in winter, which is mainly influenced by two key factors: (1) the low temperature in winter results in poor overall kinetics of a battery pack, such that the overall discharge capacity of the battery pack is low; (2) since the temperature in winter is low, the temperature distribution in different areas of the battery pack varies significantly, thus resulting in inconsistent discharge capacities of battery cells in different areas. For the first problem, generally, thermal insulation measures for a battery pack are strengthened to improve the overall discharge capacity of the battery pack; nevertheless, regarding to the inconsistent discharge capacities of battery cells in different areas resulting from different heat dissipation speeds in different areas of the battery pack in winter, there is no effective solution at the battery pack packaging level now.

The present application intends to effectively improve the endurance mileage of electric vehicles at low temperature or in winter and solve the problem of inconsistent discharge capacities in different areas of a battery pack at low temperature or in winter. In an embodiment of the present application, provided is a technical solution that at a battery pack level, battery cells with different kinetic characteristics are placed in different positions, so as to improve the discharge consistency in different areas of the battery pack at low temperature or in winter, thus improving the low-temperature discharge performance of the battery pack.

Specifically, in a first aspect of the present application, provided is a battery pack comprising a first battery cell type and a second battery cell type, wherein the first battery cell type includes n first battery cells, and the second battery cell type includes m second battery cells, with n and m being each independently selected from an integer of 1 or more,
wherein the second battery cell has an internal resistance less than that of the first battery cell, with the difference in internal resistance between the first battery cell and the second battery cell being ≥ 0.15 mohm;
the battery pack, has diagonals Lc defined across length and width directions thereof, an area enclosed by connecting 4 points on the two diagonals Lc that are positioned at a distance of 1/4 Lc from each of the endpoints of the diagonals with lines in sequence, is defined as area A, and the remaining area is defined as area B, wherein the percentage by number of the first battery cells in the battery cells comprised in the area A is 20% to 100%, and the percentage by number of the second battery cells in the battery cells comprised in the area B is 5% to 100%.

The battery pack of the present application is a square or a square-like battery pack. The battery pack has a length La, a width Lb, and a diagonal Lc defined across the length and width directions. On the surface defined by the length and width of the battery pack, the area enclosed by connecting 4 points on the two diagonals Lc that are positioned at a distance of 1/4 Lc from each of the endpoints of the diagonals with lines in sequence, is defined as area A, and the remaining area is defined as area B. The area A is located in a relatively inner part of the battery pack, and the battery cells comprised in this area have at most one surface exposed to the external air, and most of the battery cells even have no surface exposed to the external atmosphere. The battery cells in the area A thus have a poor heat dissipation coefficient, which may result in a temperature increase of the battery cells after subjecting the battery pack to a certain number of charge/discharge cycling. Comparatively, the area B is located in the outer part of the battery pack. The battery cells comprised therein have a relatively large area in contact with the external atmosphere, and some may even have three surfaces in contact with the external atmosphere, such that the battery cells therein have a larger heat dissipation coefficient. After a certain number of charge/discharge cycling, the temperature of the battery cells in the area B is relatively lower than that of the battery cells in the area A.

At low temperature or in winter, the temperature difference of the battery cells in the inner and outer areas of the battery pack may lead to discharge capacity differences of batteries in different areas. For example, the battery cells in the relatively inner area A have better kinetic performance due to a higher temperature, such that the discharge capacity is well maintained; by contrast, the battery cells in the outer area B have significantly worsened kinetic performance owing to a lower temperature, resulting in an obvious decrease in the overall discharge capacity of the battery pack at low temperature over the working time due to the cask effect. The reduced discharge consistency in the inner and outer areas may results in a significant reduction of the overall discharge capacity of the battery pack, and even, in extreme cases, the battery pack to be powered off as a whole and failing to work due to a too low temperature of some battery cells in the outer area. Therefore, in the present application, the first battery cells and the second battery cells with different internal resistances are placed in different positions of the battery pack, such that the discharge consistency of the battery cells in the inner and outer (i.e., the area B) areas at low temperature can be effectively improved, finally improving the discharge capacity retention rate of the overall battery pack at low temperature or in winter.

In an embodiment of the present application, the battery pack comprises a first battery cell type and a second battery cell type, wherein the first battery cell type includes n first battery cells, and the second battery cell type includes m second battery cells, with n and m being each independently selected from an integer of 1 or more. Optionally, n and m are each independently selected from integers of 4, 8, 12 and even 16 or more.

In an embodiment of the present application, at least one of the first battery cells and at least one of second battery cells are electrically connected in series. For the present application, it is important that the second battery cell has an internal resistance less than that of the first battery cell, with the difference in internal resistance between the first battery cell and the second battery cell being ≥ 0.15 mohm. Since the second battery cell has an internal resistance at least 0.15 mohm less than that of the first battery cell, the second battery cell has battery kinetics superior to those of the first battery cell, such that the second battery cell, even at a relatively lower temperature, can have an equivalent discharge capacity to that of the first battery cell at a relatively higher temperature, or in other words, the two types of battery cells have no significant difference in the retention degree of discharge capacity at low temperature or in winter.

The battery pack provided by the present application, by comprising first battery cells with a percentage by number of 20% to 100% in the area A as defined above and second battery cells with a percentage by number of 5% to 100% in the area B as defined above, successfully enables the difference in the discharge capacity (or the reduction of the discharge capacity) of battery cells in the inner and outer areas at low temperature or in winter is maintained at a relatively consistent level. Both of the area A and the area B can comprise the first battery cells and second battery cells at the same time.

Optionally, in the area A, the number of the first battery cells is greater than that of the second battery cells; by contrast, in the area B, the number of the second battery cells is greater than that of the first battery cells.

In some embodiments, the percentage by number of the first battery cells in the battery cells comprised in the area A is 60% to 100%, optionally, 80% - 100%. The percentage by number of the second battery cells in the battery cells comprised in the area B is 40% to 100%, optionally, 60% - 100%. The battery pack provided by the present application, by adjusting the difference value of the internal resistance of battery cells in different areas of the battery pack, appropriately compensates the discharge capacity difference resulting from the internal-external temperature difference at low temperature or in winter, reduces the influence of temperature difference in different areas on the overall performance of the battery pack, and improves the consistency of the overall discharge performance of the battery pack.

In some embodiments, the difference in the internal resistance between the first battery cell and the second battery cell is ≥ 0.20 mohm, and optionally, ≥ 0.25 mohm. In the present application, when the first battery cell and the second battery have an internal resistance difference in the above range, the kinetic performance of the battery cells in different areas of the battery pack at low temperature can be ensured to be highly consistent, and at the same time, the electrical performance consistency of the battery pack at normal temperature or a high temperature will be further improved with the number of the second battery cells in the area B of the battery pack being reduced appropriately.

In some embodiments, the ratio of the internal resistance of the first battery cells to that of the second battery cells is ≥ 1.1, and optionally, is 1.2 to 1.5. The difference in the internal resistance between the first battery cells and the second battery cells is increased, which further compensates the discharge capacity differences between the two types of battery cells resulting from the temperature difference.

In some embodiments, the first battery cell has an internal resistance of 1.5 mohm - 1.8 mohm, and the second battery cell has an internal resistance of 1.2 mohm - 1.5 mohm. The internal resistance value of the battery cells can be measured by the method described in the examples below. The internal resistance value of the two types of battery cells is respectively selected to be in a suitable range, such that the accurate control over the overall discharge capacity of the battery pack can be achieved.

In some embodiments, both of the first battery cells and the second battery cells are lithium ion secondary batteries. The lithium ion secondary battery has a positive electrode plate, a negative electrode plate, a separator, and an electrolyte, wherein the positive electrode plate comprises a positive electrode current collector and a positive electrode material layer provided on at least one surface of the positive electrode current collector, and the positive electrode material layer comprises a positive electrode active material and carbon. In some embodiments, the first battery cell comprises a first positive electrode active material represented by formula (I), and the second battery cell comprises a second positive electrode active material represented by formula (II):

LiFe₁₋ₓiM¹ₓ₁PO₄ formula (I)

LiFe₁₋ₓ₂M²ₓ₂PO₄ formula (II)

where 0 ≤ x1 ≤ 0.1, 0 < x2 ≤0.1, M¹ and M² are each independently selected from one or more of Cu, Mn, Cr, Zn, Pb, Ca, Co, Ni, Sr and Ti, and M² includes at least Mn. Since x2 is larger than 0 and M² at least includes Mn, the second positive electrode active material represented by formula (II) is a lithium iron manganese phosphate positive electrode active material. When x1 is 0, the first positive electrode active material represented by formula (I) is a lithium iron phosphate without manganese.

In some embodiments, the Mn element in the second positive electrode active material has a mass percentage greater than that of the Mn element in the first positive electrode active material. The doping of a higher content of manganese element can enlarge the lattice parameters of the second positive electrode active material represented by formula (II), improve the diffusion rate of Li⁺, and improve the comprehensive electrochemical performance of the positive electrode active material, such that the second battery cell comprising the second positive electrode active material can have an internal resistance value less than that of the first battery cell comprising the first positive electrode active material represented by formula (I). The reduction of the internal resistance value further allows the second battery cell at low temperature to have better kinetic performance compared to that of the first battery cell, and a special design with regard to the spatial arrangement of the two types of battery cells in the battery pack improves the retention rate and consistency of the discharge capacity of the overall battery pack.

In some embodiments, the second positive electrode active material has a volume mean particle size less than that of the first positive electrode active material. Optionally, the second positive electrode active material has a volume mean particle size D50 value of 0.3 µm-0.8 µm, and the first positive electrode active material has a volume mean particle size D50 value of 0.8 µm-2.0 µm. The volume mean particle size of the positive electrode active material can be measured according to GB/T19077-2016/ISO 13320:2009. Since the second positive electrode active material has a volume mean particle size D50 value less than that of the first positive electrode active material, the Li⁺ ions in the second positive electrode active material have a relatively smaller solid-phase diffusion distance within the positive electrode active material particles. In addition, having a lower volume mean particle size D50 value enables the second positive electrode active material to have a higher packing density than that of the first positive electrode active material. Theses factors allows the second positive electrode active material to have better comprehensive electrochemical performance, such that the second battery cell comprising the second positive electrode active material can have an internal resistance value less than that of the first battery cell comprising the first positive electrode active material. As stated above, the reduction of the internal resistance value allows the second battery cell at low temperature to have better kinetic performance compared to that of the first battery cell.

In some other embodiments, the first battery cell has a third positive electrode active material represented by formula (III), and the second battery cell has a fourth positive electrode active material represented by formula (IV):

Li₁₊ₓ₃NiₐCo_{b}M³_{1-a-b}O_{2-y3}A_{y3} formula (III)

Li₁₊ₓ₄MnₑM⁴₂₋ₑO_{4-d}B_{d} formula (IV)

where in formula (III), -0.1 ≤ x3 ≤ 0.2, 0.3 ≤ a < 0.95, 0 < b < 0.2, 0 < a + b < 1, 0 ≤ y3 < 0.2, M³ is selected from one or more of Mn, Fe, Cr, Ti, Zn, V, Al, Zr and Ce, and A is selected from one or more of S, F, Cl and I; in formula (IV), -0.1 ≤ x4 ≤ 0.2, 0 < e ≤ 2, 0 ≤ d < 1, M⁴ is one or more of Ni, Fe, Cr, Ti, Zn, V, Al, Mg, Zr and Ce, and B is one or more of S, N, F, Cl, Br and I.

In some embodiments, both of the first battery cell and the second battery cell contain an electrolyte, and the electrolyte in the second battery cell has an electrical conductivity greater than that of the electrolyte in the first battery cell. Since the electrolyte in the second battery cell has a larger electrical conductivity, the second battery cell has a comprehensive electrochemical performance superior to that of the first battery cell; and correspondingly, the second battery cell has an internal resistance value less than that of the first battery cell. Optionally, the electrolyte in the second battery cell has an electrical conductivity of 9 mS/cm-14 mS/cm, and the electrolyte in the first battery cell has an electrical conductivity of 5 mS/cm-8 mS/cm. The electrical conductivity of the electrolyte in the battery cells can be measured by an electrical conductivity meter.

In the present application, the spatial arrangement of different battery cells in the battery pack can be further defined, thus achieving the accurate control over the discharge performance of the battery pack. In some embodiments, in the area B of the battery pack, the battery cells at least at the four corners of the battery pack are all the second battery cells; optionally, in the area B, only the battery cells at the four corners of the battery pack are the second battery cells. Since the battery cells at the four corners of the battery pack have at least three surfaces in contact with the external atmosphere, the thermal dissipation coefficients thereof are the highest among those of all battery cells in the battery pack. The second battery cells having a smaller internal resistance and thus having better discharge performance are placed in these positions, which further balance the difference in the discharge capacity in the inner and outer areas resulting from the temperature difference.

As stated above, the battery pack at low temperature has a discharge capacity significantly less than the rated capacity thereof. According to the technical solutions of the present application, in some embodiments, the discharge capacity at -7°C of the provided battery pack is 82% - 96% of the rated capacity of the battery pack. In the battery pack of the present application, since a larger number of second battery cells with better kinetic performance are used in the outer area B, the overall discharge consistency of the battery pack is improved, the loss of the discharge capacity of battery cells in the outer area is relatively small, and therefore the battery pack has relatively a small overall discharge capacity loss at low temperature with respect to the rated capacity thereof.

The battery cells comprised in the battery pack will be illustrated in more detail below. In some embodiments, both of the first battery cells and the second battery cells are lithium ion secondary batteries.

Generally, a lithium ion secondary battery comprises a positive electrode plate, a negative electrode plate, a separator and an electrolyte. During the charge/discharge process of the battery, active ions are intercalated and de-intercalated back and forth between the positive electrode plate and the negative electrode plate. The separator is provided between the positive electrode plate and the negative electrode plate, and functions for separation. The electrolyte is located between the positive electrode plate and the negative electrode plate and functions for ionic conduction.

### [Electrolyte]

The electrolyte is located between the positive electrode plate and the negative electrode plate and functions for conducting ions. The electrolyte comprises an electrolyte salt and a solvent.

In the present application, the electrolyte salt may be an electrolyte salt commonly used in the lithium ion secondary battery, for example, a lithium salt, including a lithium salt that may be as the above high thermal stability salt, a lithium salt as a low impedance additive, or a lithium salt that inhibits the corrosion of an aluminum foil. As an example, the electrolyte salt may be selected from one or more of LiPF₆ (lithium hexafluorophosphate), LiBF₄ (lithium tetrafluoroborate), LiAsF₆ (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluorooxalate borate), LiPO₂F₂ (lithium difluorophosphate), LiDFOP (lithium bisoxalatodifluorophosphate), LiSO₃F (lithium fluorosulfonate), NDFOP (difluorobisoxalate), Li₂F(SO₂N)₂SO₂F, KFSI, CsFSI, Ba(FSI)₂ and LiFSO₂NSO₂CH₂CH₂CF₃.

The type of the solvent is not particularly limited, and may be selected according to actual needs. In some embodiments, the solvent is a non-aqueous solvent. Optionally, the solvent may include one or more of a chain carbonate, a cyclic carbonate, and a carboxylate. In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate ( EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, sulfolane (SF), dimethyl sulfone (MSM), ethyl methyl sulfone (EMS) and diethyl sulfone (ESE).

In some embodiments, the electrolyte further optionally comprises other additives. For example, the additive may include a negative electrode film-forming additive, a positive electrode film-forming additive, and also an additive that can improve certain performance of the battery, such as an additive that can improve the overcharge performance of the battery, an additive that can improve the high temperature performance of the battery, and an additive that can improve the low temperature performance of the battery. As an example, the additive are selected from at least one of a cyclic carbonate compound containing unsaturated bonds, a halogen substituted cyclic carbonate compound, a sulfate compound, a sulfite compound, a sultone compound, a disulfonic acid compound, a nitrile compound, an aromatic compound, an isocyanate compound, a phosphonitrile compound, a cyclic anhydride compound, a phosphite compound, a phosphate compound, a borate compound, and a carboxylate compound.

### [Positive electrode plate]

The positive electrode plate comprises a positive electrode current collector and a positive electrode material layer provided on at least one surface of the positive electrode current collector, the positive electrode material layer comprising a positive electrode active material and carbon.

As an example, the positive electrode current collector has two surfaces opposite in its own thickness direction, and the positive electrode material layer is provided on either or both of the two opposite surfaces of the positive electrode current collector.

In the lithium ion secondary battery of the present application, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (e.g., aluminum, an aluminum alloy, nickel, a nickel alloy, titanium, a titanium alloy, silver and a silver alloys, etc.) on a polymer material substrate (such as polypropylene (PP), polyethylene terephthalate (PET), polybutylene terephthalate (PBT), polystyrene (PS), polyethylene (PE), etc.).

The positive electrode material layer provided on the surface of the positive electrode current collector comprises a positive electrode active material. The positive electrode active material used in the present application may have a structure defined in the above formula(I), formula (II), formula (III) or formula (IV) and various numerical value definitions defined therein. Optionally, the positive electrode active material of formula (I), formula (II), formula (III) or formula (IV), at each case, is 60-100 weight%, and optionally 80-100 weight% of the total weight of the positive electrode active material in the battery cell. In some embodiments, the positive electrode active material may, in addition to the above materials, also include additional one or more of a lithium transition metal oxide, a lithium-containing phosphate with an olivine structure, and a respective modified compound thereof. An example of the lithium transition metal oxide may include, but not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide and a respective modified compound thereof. An example of the lithium-containing phosphate with an olivine structure may include, but not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite and a modified compound thereof. These materials are all commercially available. A surface of the positive electrode active material may be coated with carbon.

The positive electrode material layer optionally comprises a conductive agent. However, the type of the conductive agent is not limited specifically, and can be selected by those skilled in the art according to actual requirements. An example, the conductive agent for the positive electrode material may be selected from one or more of superconductive carbon, acetylene black, carbon black, ketjenblack, carbon dots, carbon nanotubes, graphene, and carbon nanofibers.

The positive electrode material layer optionally also comprises a binder. As an example, the binder may be one or more of a styrene-butadiene rubber (SBR), a water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA) and polyvinyl butyral (PVB).

In the present application, the positive electrode plate can be prepared according to a method known in the art. As an example, a carbon-coated positive electrode active material, a conductive agent and a binder can be dispersed into a solvent (e.g., N-methylpyrrolidone (NMP)) to form a uniform positive electrode slurry; and the positive electrode slurry is coated onto a positive electrode current collector, and is then subjected to procedures such as drying and cold pressing, so as to obtain the positive electrode plate.

### [Negative electrode plate]

A negative electrode plate comprises a negative electrode current collector and a negative electrode material layer provided on at least one surface of the negative electrode current collector, the negative electrode material layer comprising a negative electrode active material.

As an example, the negative electrode current collector has two surfaces opposite in its own thickness direction, and the negative electrode material layer is provided on either or both of the two opposite surfaces of the negative electrode current collector.

In the lithium ion secondary battery of the present application, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (e.g., copper, a copper alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In the lithium ion secondary battery of the present application, the negative electrode material layer generally comprises a negative electrode active material and an optional binder, an optional conductive agent and other optional auxiliary agents, and is generally formed by coating a negative electrode slurry, followed by drying. The negative electrode slurry is generally formed by dispersing a negative electrode active material, and an optional conductive agent and a binder etc., into a solvent and uniformly stirring same. The solvent may be N-methylpyrrolidone (NMP) or deionized water.

The specific type of the negative electrode active material is not limited, and an active material known in the art that can be used for the negative electrode of a lithium ion secondary battery can be used, and the active material can be selected by a person skilled in the art according to actual requirements. As an example, the negative electrode active material may be selected from one or more of graphite, soft carbon, hard carbon, mesophase micro carbon spheres, carbon fibers, carbon nanotubes, elemental silicon, a silicon oxide, a silicon carbon composite, and lithium titanate.

As an example, the conductive agent may be selected from one or more of superconductive carbon, acetylene black, carbon black, ketjenblack, carbon dots, carbon nanotubes, graphene, and carbon nanofibers.

As an example, the binder may be selected from one or more of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

The other optional auxiliaries are, for example, a thickening agent (for example, sodium carboxymethyl cellulose, (CMC-Na)), etc.

### [Separator]

The lithium ion secondary battery using an electrolyte further comprise a separator. The separator is provided between the positive electrode plate and the negative electrode plate, and functions for separation. The type of the separator is not particularly limited in the present application, and any well known porous-structure separator with good chemical stability and mechanical stability may be selected. In some embodiments, the material of the separator may be selected from one or more of a glass fiber, a non-woven fabric, polyethylene, polypropylene and polyvinylidene fluoride. The separator may be a single-layer film and also a multi-layer composite film, and is not limited particularly. When the separator is a multi-layer composite film, the material in each layer may be the same or different, which is not limited particularly.

In some embodiments, the positive electrode plate, the negative electrode plate and the separator can be manufactured into an electrode assembly by means of a winding process or a lamination process.

In some embodiments, the lithium ion secondary battery may comprise an outer package. The outer package can be used to encapsulate the above-mentioned electrode assembly and electrolyte.

In some embodiments, the outer package of the lithium ion secondary battery may be a hard housing, for example, a hard plastic housing, an aluminum housing, a steel housing, etc. The outer package of the lithium ion secondary battery may also be a soft bag, for example, a pouch-type soft bag. The material of the soft bag may be a plastic, and the examples of plastic may include polypropylene (PP), polybutylene terephthalate (PBT), and polybutylene succinate (PBS), etc.

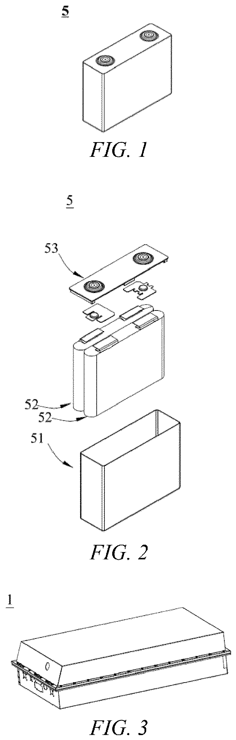

The shape of the lithium ion secondary battery is not particularly limited in the present application, and may be a cylindrical shape, a square shape or any other shape. For example, Fig. 1 is a lithium ion secondary battery 5 of a square structure as an example.

In some embodiments, referring to Fig. 2, the outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a lamination process to form an electrode assembly 52. The electrode assembly 52 is encapsulated in the accommodating cavity. The electrolyte infiltrates the electrode assembly 52. The number of the electrode assemblies 52 contained in the lithium ion secondary battery 5 may be one or more, which can be selected by a person skilled in the art according to specifically actual requirements.

In some embodiments, the lithium ion secondary batteries can be assembled into a battery module 4, and the number of the lithium ion secondary batteries contained in the battery module 4 may be one or more, and the specific number can be selected by those skilled in the art according to the application and capacity of the battery module 4. In the battery module 4, a plurality of lithium ion secondary batteries 5 may be arranged sequentially in the length direction of the battery module. Apparently, the secondary batteries may also be arranged in any other manner. Further, the plurality of lithium ion secondary batteries 5 may be fixed with fasteners. Optionally, the battery module 4 may further comprise a housing with an accommodating space, and a plurality of lithium ion secondary batteries 5 are accommodated in the accommodating space.

In some embodiments, the above lithium ion secondary batteries 5 or the battery modules 4 can be assembled into a battery pack 1, and the number of the lithium ion secondary batteries 5 or the battery modules 4 contained in the battery pack 1 can be selected by those skilled in the art according to the application and capacity of the battery pack 1.

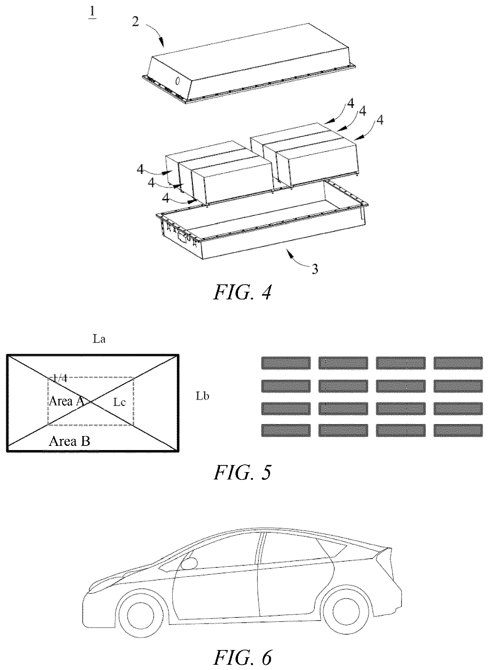

Fig. 3 and Fig. 4 show a battery pack 1 as an example. Referring to Fig. 3 and Fig. 4, the battery pack 1 may comprise a battery case and a plurality of battery cells arranged in the battery case. The battery case comprises an upper case body 2 and a lower case body 3, wherein the upper case body 2 can cover the lower case body 3 to form a closed space for accommodating the battery cells.

Fig. 5 is a schematic diagram of the area division and the arrangement of battery cells of a battery pack in an embodiment of the present application. In the figure, the area enclosed by connecting 4 points on the two diagonals Lc defined across length and width directions, that are positioned at a distance of 1/4 Lc from each of the endpoints of the diagonals with lines in sequence, is defined as area A, and the remaining area is defined as area B. The two types of battery cells are placed in corresponding areas at the percentage by number described in the present application, thus adjusting the discharge performance in different areas.

In addition, the present application further provides a device comprising the battery pack provided by the present application. The battery pack may be used as a power supply for the device, or an energy storage unit for the device. The device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like.

For the device, the battery pack can be selected according to the usage requirements thereof.

Fig. 6 shows a device as an example. The device is a pure electric vehicle, a hybrid electric vehicle, a plug-in hybrid electric vehicle or the like. In order to meet the requirements of the device for a high power and a high energy density of a lithium ion secondary battery, a battery pack or a battery module can be used.

### Examples

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.
1. The test methods for various parameters of the battery cell and the discharge capacity of the battery pack are as follows:
   1) Determination of Mn element content: A ZEISS sigma 300 scanning electron microscope is used for the test; an appropriate amount of a powder is placed on an electrically conductive adhesive, then the sample is charged into a sample chamber, the sample chamber is closed and vacuumed, and then a software of EDS is started to automatically collect the element distribution information;
   2) determination of mean particle size D50 value of positive electrode active material: A laser particle size analyzer of model Malvern 2000 (MasterSizer 2000) is used, with reference to the standard process: GB/T19077-2016/ISO 13320:2009, and the specific test process includes: taking an appropriate amount of the sample to be tested (the sample having a concentration that can ensure a shading degree of 8%-12%), adding 20 ml of deionized water and externally applying an ultrasonic treatment (53 KHz/120 W) for 5 min, at the same time to ensure that the sample is completely dispersed, and then performing tests on the sample according to the GB/T19077-2016/ISO 13320:2009 standard.
   3) Determination of the electrical conductivity of the electrolyte: The electrolyte is subjected to an electrical conductivity test using a conductivity meter of model LEI-CI DDSJ-318; firstly, the electrode probe is placed into a standard electrolyte for calibration and then placed into the electrolyte to be tested for testing, the tests are repeated three times, and the average value is calculated and rounded to two decimal places.
   4) Tests of internal resistance of battery:
      the capacity of the battery cell is adjusted to 50% SOC: at an environment of 25°C, a lithium ion battery is charged and discharged at a constant rate of 1/3 C (1 C = the rated capacity of the battery cell), with a charge/discharge voltage in a range of 2.8-3.65 V, the step is repeated three times, and
      the third discharge capacity obtained is recorded as a nominal capacity C0 of the battery cell; the battery cell is charged at a rate of 1/3 C0 to half of the nominal capacity, and the battery cell is adjusted to have an SOC state of 50% SOC;
      tests of internal resistance of battery: at an environment of 25°C, the battery cell as described above is discharged at 4 C0 for 30 s, and the voltages before and after discharging are respectively recorded as V0 and V1, and the internal resistance value of the battery is recorded as (V0 - V1)/4 C0.
   5) Tests of discharge capacity of battery pack:
      tests for the discharge capacity at 25°C: the battery pack is place at an environment of 25°C, the lithium ion batteries are charged and discharged at a constant rate of 1/3 C (1 C = the rated capacity of the battery cell), with a charge/discharge voltage in a range of 2.8-3.65 V, the step is repeated three times, and the third discharge capacity obtained is recorded as a nominal capacity C1 of the battery pack;
      tests of the discharge capacity at -7°C: the battery pack is place at an environment of -25°C, the lithium ion batteries are discharged at a constant rate of 1/3 C1 to an end-of-discharge voltage of 2.0 V, and
      the discharge capacity at the moment is recorded as C2;
      the discharge capacity retention rate of the battery pack at -7°C: the C2/C1 ratio is the discharge capacity retention rate of the battery pack at -7°C.
2. Preparation of battery cells

### (1) Preparation of positive electrode plate

Carbon-coated lithium iron phosphate (LFP) as a positive electrode active material, a conductive agent of acetylene black, a binder of polyvinylidene fluoride (PVDF) are dissolved at a weight ratio of 96 : 2 : 2 into a solvent of N-methylpyrrolidone (NMP), and fully stirred and mixed to obtain a positive electrode slurry, for a first battery cell, a lithium iron phosphate material having a Mn content as shown in Table 1 is selected as the positive electrode active material (the lithium iron phosphate material may inherently contain a certain amount of Mn as an impurity; if the content of the Mn impurity is insufficient, Mn can be intentionally doped to achieve the indicated Mn content). For a second battery cell, a lithium iron manganese phosphate material having a respectively specific Mn content as shown in Table 2 is selected as the positive electrode active material by doping the lithium iron phosphate material with Mn. In addition, the selected lithium iron phosphate particle material and the lithium iron manganese phosphate particle material are sieved by using a particle sieving machine, and the materials are further sieved into fractions with different volume mean particle size D50 values and are respectively used in the preparation of different battery cells. The positive electrode slurry is uniformly coated onto a positive electrode current collector, followed by drying, cold pressing and slitting to obtain a positive electrode plate.

### (2) Preparation of negative electrode plate

A negative electrode active material of synthetic graphite, a conductive agent of acetylene black, a binder of styrene butadiene rubber (SBR) and a thickening agent of sodium carboxymethyl cellulose (CMC-Na) are dissolved at a weight ratio of 95 : 2 : 2 : 1 into a solvent of deionized water, and uniformly mixed to prepare a negative electrode slurry. The negative electrode slurry is uniformly coated onto a negative electrode current collector of a copper foil, dried and then subjected to cold pressing and slitting to obtain the negative electrode plate.

### (3) Preparation of electrolyte

In a glove box under argon atmosphere (H₂O < 0.1 ppm, O₂ < 0.1 ppm), organic solvents of ethylene carbonate (EC), dimethyl carbonate (DMC), and ethyl methyl carbonate (EMC) are uniformly mixed at a weight ratio listed in Table 1 and Table 2 respectively, lithium hexafluorophosphate (LiPF₆) is added and adjusted to a concentration of 1 M/L, and the mixture is uniformly stirred to obtain a corresponding electrolyte. Electrolytes having an electrical conductivity as shown in Table 1 and Table 2 are obtained by adjusting the composition and amount of the solvents as well as the concentration of the electrolyte salt of the electrolytes, and are used for preparing corresponding battery cells.

### (4) Preparation of lithium ion secondary batteries

The above positive electrode plate prepared in (1) and the above negative electrode plate prepared in (2) are used, and a polypropylene film is used as a separator; the positive electrode plate, the separator and the negative electrode plate are stacked in sequence, such that the separator is located between the positive electrode plate and the negative electrode plate to function for isolation, followed by winding to obtain an electrode assembly. The electrode assembly is placed in a battery housing, dried, and then the electrolyte is injected, followed by the procedures of formation and leaving to stand to obtain a lithium ion secondary battery as a battery cell.

### 3. Packaging of the battery pack

The first battery cells and second battery cells having different Mn contents, active electrode active materials having different volume mean particle size D50 values and electrolytes with different electrical conductivity prepared as stated above are placed according to the numbers and areas shown in Table 3, so as to obtain the batty packs with different battery cell arrangements. The assembled battery pack in an example of the present application merely comprises the first battery cells and the second battery cells prepared as stated above; in which, the total number of all battery cells in the area A is 48, and that of all battery cells in the area B is 72.

The battery pack prepared in each example is subjected to the discharge capacity test, and the test results are shown in Table 3.

**Table 1: Corresponding parameters and tested internal resistance values of first battery cells A1-A7**

| | Mn content (weight%) | Lithium iron phosphate volume mean particle size D50 (µm) | Composition and weight ratio of solvents EC : DMC : EMC | Concentration of lithium salt (M/L) | Electrolyte electrical conductivity (ms/cm) | Internal resistance of battery (mohm) |
|---|---|---|---|---|---|---|
| Battery cell A1 | 0.01% | 1.11 | 2:2:6 | 1 | 7.21 | 1.65 |
| Battery cell A2 | 0.05% | 1.14 | 2:2:6 | 1 | 7.21 | 1.63 |
| Battery cell A3 | 0.07% | 1.18 | 2:2:6 | 1 | 7.21 | 1.61 |
| Battery cell A4 | 0.05% | 1.31 | 2:2:6 | 1 | 7.21 | 1.64 |
| Battery cell A5 | 0.05% | 0.87 | 2:2:6 | 1 | 7.21 | 1.61 |
| Battery cell A6 | 0.05% | 1.14 | 2 : 1 : 7 | 1 | 6.34 | 1.64 |
| Battery cell A7 | 0.05% | 1.14 | 2 : 3: 5 | 1 | 7.91 | 1.58 |

**Table 2: Corresponding parameters and tested internal resistance values of second battery cells B1-B9**

| | Mn content (weight%) | D50 value of lithium iron manganese phosphate volume (µm) | Composition and weight ratio of solvents EC : DMC : EMC | Concentration of lithium salt (M/L) | Electrical conductivity of electrolyte (ms/cm) | Internal resistance of battery (mohm) |
|---|---|---|---|---|---|---|
| Battery cell B 1 | 0.2% | 0.44 | 2 : 5 : 3 | 1 | 10.34 | 1.35 |
| Battery cell B2 | 5% | 0.45 | 2 : 5 : 3 | 1 | 10.34 | 1.34 |
| Battery cell B3 | 10% | 0.47 | 2 : 5 : 3 | 1 | 10.34 | 1.30 |
| Battery cell B4 | 20% | 0.48 | 2 : 5 : 3 | 1 | 10.34 | 1.25 |
| Battery cell B5 | 5% | 0.11 | 2:5:3 | 1 | 10.34 | 1.10 |
| Battery cell B6 | 5% | 0.62 | 2 : 5 : 3 | 1 | 10.34 | 1.38 |
| Battery cell B7 | 5% | 0.76 | 2 : 5 : 3 | 1 | 10.34 | 1.41 |
| Battery cell B8 | 5% | 0.45 | 2 : 4 : 4 | 1 | 9.53 | 1.42 |
| Battery cell B9 | 5% | 0.45 | 2 : 6 : 2 | 1 | 13.35 | 1.30 |

**Table 3: Discharge capacity test results for battery packs of examples 1-7 and comparative examples 1-2**

| Example no. | Area A | | | Area B | | | Discharge Capacity retention rate |
|---|---|---|---|---|---|---|---|
| | First battery type | Number of first battery cells | Range of resistance value of first battery cell | Second battery type | Number of second battery cells | Range of resistance value of second battery cells | |
| Example 1 | A1 | All | 1.61-1.71 | B5 | 4 | 1.05-1.15 | 82.2% |
| Example 2 | A1 | All | 1.61-1.71 | B5 | 8 | 1.05-1.15 | 83.5% |
| Example 3 | A1 | All | 1.61-1.71 | B5 | 20 | 1.05-1.15 | 85.4% |
| Example 4 | A1 | All | 1.61-1.71 | B5 | 32 | 1.05-1.15 | 90.1% |
| Example 5 | A1 | All | 1.61-1.71 | B5 | All | 1.05-1.15 | 95.2% |
| Example 6 | A7 | All | 1.55-1.60 | B4 | 4 | 1.21-1.29 | 84.3% |
| Example 7 | A7 | All | 1.55-1.60 | B2 | 4 | 1.30-1.39 | 83.1% |
| Comparative example 1 | A7 | All | 1.55-1.60 | A7 | All | 1.55-1.60 | 80.2% |
| Comparative example 2 | B5 | All | 1.05-1.15 | A1 | All | 1.61-1.71 | 89.3% |

It can be seen from Table 1 that for the first battery cells, in a case where the particle size D50 value of the positive electrode active material of lithium iron phosphate and the electrical conductivity of the electrolyte remain the same, the resistance thereof is slightly reduced with the slight increase in the Mn content in the positive electrode active material. Also, in a case where the other two conditions remain the same, the resistance of the first battery cells is increased with the increase of the particle size D50 value of lithium iron phosphate, and is reduced as the electrical conductivity of the electrolyte increases.

Similarly, these situations are also applied to the second batter cells, and reference can be made to Table 2. As shown in Table 2, for the second battery cells, in a case where the particle size D50 value of the positive electrode active material of lithium iron manganese phosphate and the electrical conductivity of the electrolyte remain the same, the resistance thereof is significantly reduced with the increase in the Mn content in the positive electrode active material. Also, in a case where the other two conditions remain the same, the resistance of the second battery cells is increased with the increase of the particle size D50 value of lithium iron manganese phosphate, and is reduced as the electrical conductivity of the electrolyte increases. In general, since the Mn content of the positive electrode active material and the electrical conductivity of the electrolyte in the second battery cell are higher than those in the first battery cell and the lithium iron manganese phosphate in the second battery cell has a particle size D50 value less than that of the lithium iron phosphate in the first battery cell, the second battery cell has a resistance value significantly less than that of the first battery cell.

It can be seen from the experimental data shown in Table 3 that, when all battery cells in the area A are first battery cells, the overall discharge capacity retention rate of the battery pack increases with the increase of the number (and the percentage by number) of the second battery cells in the area B. In a case where the number and the layout of each type of battery cells in the battery pack are relatively the same, the smaller the resistance value of the second battery cells, the higher the discharge capacity retention rate of the batter pack.

In comparative example 1, the number of the second battery cells in the area B is 0, which means that all battery cells in the area B at the moment are first battery cells, that is to say, all battery cells in both areas of the battery pack of comparative example 1 are first battery cells. The discharge capacity of the battery pack at the moment is merely 80.2%, which is the lowest discharge capacity retention rate among those of all battery packs prepared in examples of the present application.

Notably, for comparative example 2, the battery cells in the area B are all first battery cells, and those in the area A are all second battery cells. Comparing comparative example 2 with example 5, the battery cells in the battery packs are arranged in completely opposite positions. The test results regarding to the discharge capacity of the two battery pack demonstrate that, the battery pack of example 5 has a discharge capacity retention rate significantly larger than that of the comparative example 2. This indicates that even with the same number of battery cells of the same type, the discharge capacity retention rate of the battery pack at low temperature will change significantly under different spatial arrangements. The battery pack prepared by the present application has a significantly improved discharge capacity retention rate at low temperature compared to that of the prior art under the same conditions.

Although the present application is described with reference to the examples, various improvements may be made thereto, and the components thereof may be replaced with equivalents, without departing from the scope of the present application. In particular, the technical features mentioned in the embodiments can be combined in any manner as long as there is no structural conflict. The present application is not limited to specific embodiments disclosed herein, but includes all technical solutions that fall within the scope of the claims.

## Claims

**1.** A battery pack comprising a first battery cell type and a second battery cell type, wherein the first battery cell type includes n first battery cells, and the second battery cell type includes m second battery cells, with n and m being each independently selected from an integer of 1 or more,
wherein the second battery cell has an internal resistance less than that of the first battery cell, with the difference in internal resistance between the first battery cell and the second battery cell being ≥0.15 mohm;
the battery pack, has diagonals Lc defined across length and width directions thereof, an area enclosed by connecting 4 points on the two diagonals Lc that are positioned at a distance of 1/4 Lc from each of the endpoints of the diagonals with lines in sequence, is defined as area A, and the remaining area is defined as area B, wherein the percentage by number of the first battery cells in the battery cells comprised in the area A is 20% to 100%, and the percentage by number of the second battery cells in the battery cells comprised in the area B is 5% to 100%.

**2.** The battery pack according to claim 1, wherein the difference in the internal resistance between the first battery cell and the second battery cell is ≥ 0.20 mohm, optionally, ≥ 0.25 mohm.

**3.** The battery pack according to claim 1 or 2, wherein the ratio of the internal resistance of the first battery cell to that of the second battery cell is ≥ 1.1, and optionally, is 1.2 to 1.5.

**4.** The battery pack according to any one of claims 1 to 3, wherein the first battery cell has an internal resistance of 1.5 mohm - 1.8 mohm, and the second battery cell has an internal resistance of 1.2 mohm - 1.5 mohm.

**5.** The battery pack according to any one of claims 1 to 4, wherein the first battery cell comprises a first positive electrode active material represented by formula (I), and the second battery cell comprises a second positive electrode active material represented by formula (II):
LiFe₁₋ₓiM¹ₓ₁PO₄ formula (I)
LiFe₁₋ₓ₂M²ₓ₂PO₄ formula (II)
where 0 ≤ x1 ≤ 0.1, 0 < x2 ≤0. 1, M¹ and M² are each independently selected from one or more of Cu, Mn, Cr, Zn, Pb, Ca, Co, Ni, Sr and Ti, and M² includes at least Mn.

**6.** The battery pack according to claim 5, wherein the Mn element in the second positive electrode active material has a mass percentage greater than that of the Mn element in the first positive electrode active material.

**7.** The battery pack according to claim 5 or 6, wherein the second positive electrode active material has a volume mean particle size less than that of the first positive electrode active material,
and optionally, the second positive electrode active material has a volume mean particle size D50 value of 0.3 µm-0.8 µm, and the first positive electrode active material has a volume mean particle size D50 value of 0.8 µm-2.0 µm.

**8.** The battery pack according to any one of claims 1 to 4, wherein the first battery cell comprises a third positive electrode active material represented by formula (III), and the second battery cell comprises a fourth positive electrode active material represented by formula (IV):
Li₁₊ₓ₃NiₐCo_{b}M³_{1-a-b}O_{2-y3}A_{y3} formula (III)
Li₁₊ₓ₄MnₑM⁴₂₋ₑO_{4-d}B_{d} formula (IV)
where in formula (III), -0.1 ≤ x3 ≤ 0.2, 0.3 ≤ a < 0.95, 0 < b < 0.2, 0 < a + b < 1, 0 ≤ y3 < 0.2, M³ is selected from one or more of Mn, Fe, Cr, Ti, Zn, V, Al, Zr and Ce, and A is selected from one or more of S, F, Cl and I; in formula (IV), -0.1 ≤ x4 ≤ 0.2, 0 < e ≤ 2, 0 ≤ d < 1, M⁴ is one or more of Ni, Fe, Cr, Ti, Zn, V, Al, Mg, Zr and Ce, and B is one or more of S, N, F, Cl, Br and I.

**9.** The battery pack according to any one of claims 1 to 8, wherein both of the first battery cell and the second battery cell contain an electrolyte, and the electrolyte in the second battery cell has an electrical conductivity greater than that of the electrolyte in the first battery cell,
and optionally, the electrolyte in the second battery cell has an electrical conductivity of 9 mS/cm-14 mS/cm, and the electrolyte in the first battery cell has an electrical conductivity of 5 mS/cm-8 mS/cm.

**10.** The battery pack according to any one of claims 1 to 9, wherein in the area B, the battery cells at least at the four corners of the battery pack are all the second battery cells; optionally, in the area B, only the battery cells at the four corners of the battery pack are the second battery cells.

**11.** The battery pack according to any one of claims 1 to 10, wherein the percentage by number of the first battery cells in the battery cells comprised in the area A is 60% to 100%, optionally, 80% to 100%.

**13.** The battery pack according to any one of claims 1 to 12, wherein the percentage by number of the second battery cells in the battery cells comprised in the area B is 40% to 100%, optionally, 60% to 100%.

**14.** The battery pack according to any one of claims 1 to 13, wherein the discharge capacity at -7°C of the battery pack is 82% - 96% of the rated capacity of the battery pack.

**15.** A power consuming device comprising a battery pack according to any one of claims 1-14.
